# FASCICULE DE BREVET EUROPEEN

(11) **EP 3 233 456 B1**
(45) Date de publication et mention de la délivrance du brevet: **21.11.2018**
(21) Numéro de dépôt: 15808621.5
(22) Date de dépôt: 14.12.2015
(51) Int. Cl.: B29D 30/06, B29C 33/44

(54) **MOULE ET PROCÉDÉ POUR LA VULCANISATION D'UN ADAPTATEUR ANNULAIRE DE PNEUMATIQUE SUR UNE JANTE**
FORM UND VERFAHREN ZUM VULKANISIEREN EINES RINGFÖRMIGEN ADAPTERS FÜR EINE REIFENFELGE
MOULD AND METHOD OF VULCANIZING A RING-SHAPED ADAPTER FOR A TIRE RIM

(30) Priorité: 17.12.2014 FR 1462647
(43) Date de publication de la demande: 25.10.2017
(73) Titulaire: Compagnie Générale des Etablissements Michelin, 63000 Clermont-Ferrand (FR); Michelin Recherche et Technique S.A., 1763 Granges-Paccot (CH)
(72) Inventeur: FABRE, Thomas, 63040 Clermont-Ferrand Cedex 9 (FR); PIALOT, Frédéric, 63040 Clermont-Ferrand Cedex 9 (FR)
(74) Mandataire: Noel, Luminita
(86) Numéro de dépôt international: PCT/EP2015/079588
(87) Numéro de publication internationale: WO 2016/096722

(56) Documents cités:
- WO-A1-00/78565
- CN-A- 102 357 956
- US-A- 3 653 670
- US-A- 4 155 153
- US-A- 4 555 376
- US-A- 5 232 033
- US-A- 5 232 034

## Description

L'invention concerne un moule de vulcanisation et un procédé de mise en oeuvre de celui-ci pour la fabrication d'un adaptateur de pneumatique utilisé pour le montage du pneumatique sur une jante.

On connaît du document WO 00/78565 un tel adaptateur réalisé à base de mélanges de caoutchouc renforcés et déformables élastiquement dans les directions axiale et radiale, deux adaptateurs reliant la jante aux bourrelets du pneumatique permettent d'améliorer les propriétés de ce dernier.

Plus particulièrement, un tel adaptateur comprend un bourrelet qui assure l'accrochage de l'adaptateur à la jante, une armature de renforcement permettant la déformation élastique dans les directions radiale et axiale et un renfort d'adaptateur destiné à recevoir le bourrelet du pneumatique. Un tel adaptateur est réalisé en empilant couches à base de mélanges de caoutchouc sur un support et doit être vulcanisé dans un moule à l'intérieur d'une presse de vulcanisation afin qu'il acquière les propriétés d'élasticité souhaitées. Le moule, spécifique à une dimension d'adaptateur, est formé par l'ensemble des pièces destinées à être mises en contact avec l'ébauche d'adaptateur à vulcaniser et comprend des supports et coquilles destinés à transmettre la chaleur et à garantir la bonne pression de vulcanisation.

De par ses fonctions et ses nécessités de montage, l'adaptateur a une forme générale annulaire dont le profil de sa section transversale suit une courbe plane à un ou plusieurs points d'inflexion. En effet, la forme de la section de l'adaptateur est déterminée par la forme de la section de la jante et par le type de pneu associé, et de ce fait, son profil est souvent complexe. De plus, la déformation dans les deux directions axiale et radiale de l'adaptateur doit avoir des valeurs prédéterminées très précises et, de ce fait, l'adaptateur doit respecter des conditions dimensionnelles assez strictes.

Les composants d'un adaptateur s'apparentant à ceux qui entrent dans la composition d'un pneumatique, on a essayé d'appliquer les méthodes de fabrication d'un pneumatique à la fabrication d'un tel adaptateur.

On connait ainsi que pour le moulage et la vulcanisation d'un pneumatique les moyens généralement connus font appel à l'utilisation d'un moule à segments pour définir la surface extérieure du pneumatique et à une membrane de vulcanisation gonflable pour définir la surface intérieure du pneumatique. Ces moyens ne permettent toutefois pas de maîtriser la précision de la forme et des dimensions du pneumatique et ceci ne peut donc pas s'appliquer pour réaliser un adaptateur dont les dimensions doivent être rigoureusement respectées. De surcroît, la durée de vie d'une membrane de vulcanisation est assez faible, ce qui augmente le coût de fabrication.

On connaît par ailleurs, notamment du document EP 0 242 840 au nom de la demanderesse, l'utilisation d'un moule rigide pour le moulage et la vulcanisation du pneumatique qui permet de pallier aux problèmes de précision géométrique et dimensionnelle du pneu, mais au détriment d'une structure plus complexe du moule. Ce moule convenant bien au moulage d'un pneumatique, il utilise toutefois plusieurs secteurs du type à clés et voûtes dont la construction et la cinématique sont complexes.

L'invention a pour but de simplifier la construction et la cinématique du moule de vulcanisation d'un adaptateur, tout en garantissant une bonne précision d'exécution de celui-ci. On constate toutefois que, de par la forme géométrique de l'adaptateur, celui-ci ne peut être démoulé facilement après vulcanisation dans un moule simple, s'ouvrant par glissement selon les directions axiale et/ou radiale du moule. En effet, de par la forme en contre-dépouille de l'adaptateur, le démoulage d'un moule simple ne peut être obtenu sans destruction du moule. A l'inverse, un moule réutilisable doit comporter plusieurs parties mobiles à mouvements complexes. Aucune de ces solutions n'est viable économiquement.

Le but de l'invention est un moule de vulcanisation d'adaptateur de pneumatique sur jante et un procédé de mise en oeuvre de ce moule permettant de remédier au moins en partie aux inconvénients précités.

A cet effet, l'invention propose un moule de vulcanisation d'un adaptateur annulaire de pneumatique sur une jante de véhicule, ledit moule comportant :
- un moule inférieur non déformable définissant la surface extérieure de l'adaptateur ;
- deux coquilles latérales mobiles axialement entre une position de fermeture et d'ouverture du moule servant au moulage des surfaces frontales de l'adaptateur ;
- une couronne périphérique divisée en plusieurs secteurs mobiles radialement entre une position de fermeture et d'ouverture du moule assurant le moulage de la surface intérieure de l'adaptateur ;
caractérisé en ce que ledit moule inférieur non déformable comprend un support rigide sur lequel est monté un anneau souple ledit moule étant réalisé de manière à ce que l'anneau souple soit emboîté à l'intérieur du moule en position de fermeture de celui-ci.

Un tel moule permet de vulcaniser de manière simplifiée, économique et réversible, un adaptateur en gomme de forme générale annulaire et comportant au moins une forme en contre-dépouille (ou autrement dit, une forme de révolution obtenue par rotation d'une génératrice, ayant au moins un point d'inflexion au niveau du bourrelet, autour d'un axe central). En effet, un tel adaptateur, une fois vulcanisé est suffisamment rigide pour ne pas se déformer par rapport aux pièces rigides du moule. De ce fait, le moulage de la partie en contre-dépouille sur une pièce souple permet de démouler facilement l'adaptateur par simple retrait de l'adaptateur vulcanisé. Le moulage de l'ébauche de l'adaptateur se fait sur un support non déformable, du type noyau rigide en faisant monter en température la gomme. La pression de moulage est obtenue par dilatation de la gomme. Ceci implique la réalisation avec précision de l'ébauche et le maintien de celle-ci sur un support non déformable. Cette dernière condition est réalisée par l'emboîtage de l'anneau souple à l'intérieur du moule en position de fermeture de celui-ci. L'anneau souple étant emboîté à l'intérieur du moule (on comprend qu'il est inséré entre les différentes pièces du moule sans possibilité de déplacement et sans jeu), l'anneau souple conserve sa forme initiale lors de la vulcanisation de l'ébauche de l'adaptateur. Il a ainsi été constaté que l'adaptateur obtenu avec le moule de l'invention, dont les composants sont rigides ou non déformables, présente une forme et des dimensions précises, malgré l'utilisation d'une empreinte souple.

Le moule de l'invention comprend par ailleurs d'autres caractéristiques avantageuses, telles :
- l'anneau souple est monté sans possibilité de déplacement entre ledit support rigide et une coquille latérale et est espacé des secteurs d'une distance correspondant à l'épaisseur de l'adaptateur ;
- le support rigide est réalisé en un matériau métallique et ledit anneau souple est réalisé en un matériau inorganique ;
- l'anneau souple est en silicone ayant une dureté supérieure à 30 Shore A et de préférence supérieure à 50 Shore A ;
- l'ensemble de pièces formé par le moule inférieur, les coquilles et les secteurs définit l'espace de moulage de l'adaptateur et ces pièces ont une configuration telle qu'elles sont en relation de glissement l'une par rapport à l'autre au moins pendant la phase finale de fermeture du moule ;
- le moule inférieur non déformable sert de support d'assemblage de l'ébauche d'adaptateur ;
- l'adaptateur comprend un bourrelet d'adaptateur servant à la fixation sur une jante, une armature d'adaptateur qui relie le bourrelet à un renfort d'adaptateur apte à se fixer autour du bourrelet d'un pneumatique.

Les objets de l'invention sont également atteints avec un procédé de vulcanisation d'un adaptateur (1) de pneumatique sur une jante de véhicule moyennant un moule (20) de vulcanisation selon l'une des revendications précédentes, comportant les étapes suivantes :
- on installe une ébauche de gomme crue sur un moule inférieur (17) non déformable comportant un support moulant rigide (10) annulaire qui supporte un anneau souple (15) et définit avec ce dernier la surface extérieure de l'adaptateur,
- on déplace axialement deux coquilles latérales (24, 26) et radialement une couronne périphérique de secteurs (22) pour fermer ledit moule (20),
caractérisé en ce que, en position de fermeture du moule (20) on vient emboîter ledit anneau souple (15) à l'intérieur du moule.

Le procédé de l'invention comporte une étape préalable d'assemblage de ladite ébauche d'adaptateur directement sur le moule inférieur non déformable.

Dans le procédé de l'invention au moins une nappe de gomme de ladite ébauche d'adaptateur est obtenue par un dépôt de bandelettes de gomme à l'aide d'une pompe volumétrique.

L'invention sera mieux comprise grâce à la suite de la description, qui s'appuie sur les figures suivantes :
- la figure 1 est une vue en perspective d'un adaptateur coupé avec un plan passant par son axe de symétrie ;
- la figure 2 est une vue en perspective d'un secteur de moule selon l'invention ;
- les figures 3a à 3e illustrent, par des vues en coupe radiale, les différentes étapes du procédé de l'invention ;
- la figure 4 illustre, par une vue en perspective, un adaptateur obtenu avec le procédé de vulcanisation de l'invention après le démoulage.

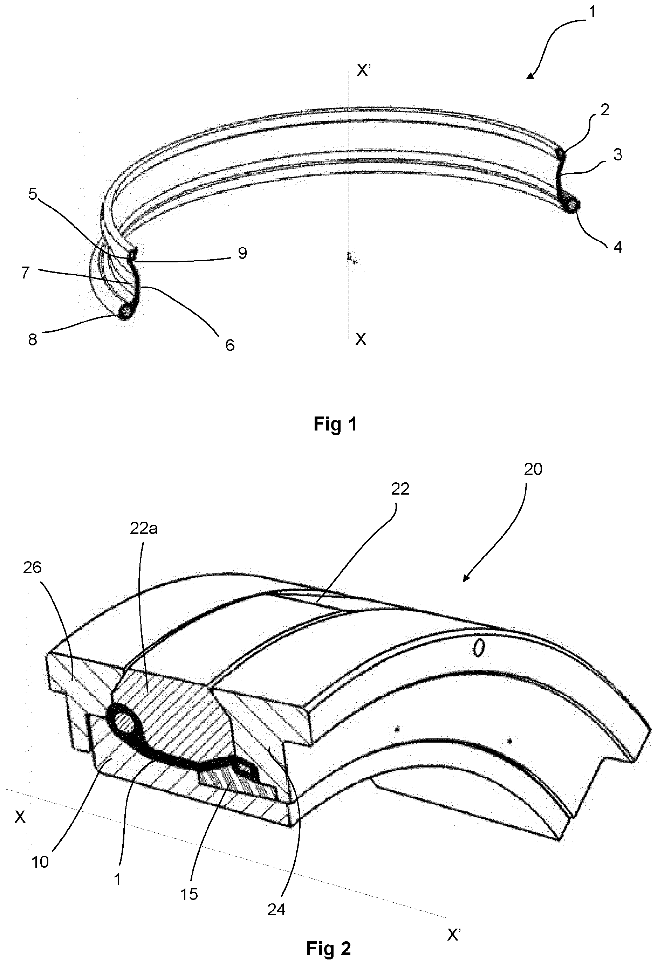

La figure 1 illustre un adaptateur 1 coupé avec un plan passant par son axe de symétrie X-X'. L'adaptateur 1 est destiné à être monté entre une jante et un pneumatique (non représentés) pour former un ensemble du type décrit dans le document WO 00/78565 au nom de la demanderesse. L'adaptateur 1 comprend à cet effet un bourrelet 2 d'adaptateur servant à la fixation sur une jante, une armature 3 d'adaptateur qui relie le bourrelet 2 à un renfort 4 d'adaptateur apte à se fixer autour du bourrelet d'un pneumatique.

Dans l'exemple illustré, l'armature 3 d'adaptateur est formée d'une nappe principale réalisée à base de câbles textiles parallèles entre eux et radiaux englobés dans une base de caoutchouc, telle une nappe carcasse. Cette nappe est agencée de manière à former un retournement autour du renfort 4 de l'adaptateur et, d'autre part, elle est ancrée dans le bourrelet 2 de l'adaptateur 1 en formant également un retournement. Le bourrelet 2 d'adaptateur comprend une tringle métallique 5 autour de laquelle est formé ledit retournement. Le renfort 4 comprend un tube métallique 8 ou une tringle pleine réalisée en un matériau composite autour desquels sont agencées les différentes nappes à base de caoutchouc. La nappe principale est complétée par une ou plusieurs nappes secondaires, telles une nappe de protection agencée sur la face externe 6 de l'adaptateur, voire d'une nappe d'étanchéité ou gomme intérieure, agencée sur la face interne 7 de l'adaptateur, voire d'autres gommes de remplissage ou de bourrage au niveau des tringles, tel qu'il sera expliqué par la suite.

Tel que visible à la figure 1, l'adaptateur 1 présente une forme générale annulaire d'axe de symétrie X-X' et peut être réalisé par empilage de différentes nappes et pose de produits sur un tambour rotatif. Toutefois, l'adaptateur 1 présente une forme en contre-dépouille 9 dont il faut tenir compte lors du moulage.

Selon l'invention, on réalise le moulage de l'adaptateur 1 en empreinte souple non déformable montée sur un support rigide, support qui sert ensuite au moulage de l'adaptateur. Plus particulièrement selon l'invention, et en référence à la figure 2, on utilise un moule 20 qui comprend un ensemble formé par un support rigide 10, qui a une forme de révolution autour de l'axe X-X', sur lequel on installe un anneau souple 15 centré sur l'axe X-X'. L'anneau souple 15 comporte une face 14 circonférentielle externe de même forme que la forme en contre-dépouille 9 circonférentielle interne de l'adaptateur 1. Selon un aspect avantageux de l'invention, le support rigide 10 et l'anneau souple 15 forment un ensemble de moule inférieur 17 qui est utilisé en tant que support d'assemblage pour les différentes nappes et différents composants de l'adaptateur 1. Par support rigide on comprend un support sensiblement non déformable, abstraction faite de très faibles déformations élastiques dues aux pressions exercées par la pression de moulage. Par anneau souple, on comprend un anneau qui est plus souple que le support rigide. L'anneau souple doit aussi l'être par rapport à l'adaptateur figé après vulcanisation, de manière à pouvoir se déformer facilement par rapport à ceux-ci.

Le moule inférieur 17 est complété ensuite par une couronne périphérique de plusieurs secteurs circonférentiels 22, les secteurs étant entraînés en un mouvement radial de fermeture/ouverture du moule, et par deux coquilles latérales 24, 26 annulaires à mouvement axial de fermeture/ouverture, ces pièces étant centrées sur l'axe X-X' qui est également l'axe de symétrie du moule 20. Par axial on comprend une direction parallèle à l'axe X-X' et par radial une direction radiale perpendiculaire à ce dernier.

De la sorte, le moule 20 assure le moulage des surfaces intérieure et extérieure de l'adaptateur et définit complètement un espace de moulage. Ce moule rigide donne la forme et les dimensions définitifs à l'adaptateur réalisé à partir d'une ébauche non vulcanisée, l'élévation de température lors de la vulcanisation provoquant un différentiel de dilatation entre le caoutchouc non vulcanisé et le matériau constituant le moule rigide et assure le moulage à une pression appropriée.

Ce moule permet de vulcaniser l'adaptateur avec une précision géométrique nettement supérieure à celle pouvant être atteinte avec une membrane souple de cuisson, car toutes les pièces du moule 20 sont non déformables, alors que le procédé classique de vulcanisation doit prendre en compte les déformations d'une membrane de vulcanisation gonflable. On obtient ainsi un adaptateur dont les dimensions sont dans des tolérances inférieures à +/- 0.35mm.

La vulcanisation de l'ébauche d'adaptateur est ainsi effectuée à volume constant, la gomme posée sur le support étant posée de manière à ce que le volume de l'ébauche soit très précis, la pression de vulcanisation est alors fournie par la dilatation de la gomme qui est de l'ordre de 3 à 4% du volume de l'ébauche. Le procédé de fabrication de l'adaptateur se fait sans avoir recours à la moindre conformation, les produits posés sur le support non déformable ne subissent donc pas de mouvements relatifs jusqu'à ce que la structure de l'adaptateur soit figée par la vulcanisation.

L'anneau souple 15 est de préférence un anneau en silicone qui permet de tenir la température de vulcanisation, il doit donc résister à au moins 180°C sans se détériorer. Il doit être suffisamment souple afin qu'il puisse se déformer facilement, par exemple à la main, lors du démoulage. Un tel anneau a par exemple une dureté de 50 Shore A. L'anneau souple 15 doit être réalisé avec des dimensions très précises et doit être exempt de porosités afin qu'il puisse garder sa forme dans le moule. Selon l'invention, cet anneau souple 15 est assemblé par emboîtage entre les différents composants du moule et ne se déforme pas lors de la vulcanisation. Plus particulièrement, la montée en température lors de la vulcanisation provoque un différentiel de dilatation entre le caoutchouc non vulcanisé et le matériau du moule rigide faisant que la pression exercée par la gomme arrive à environ 50-60bar et cette pression ne permet pas à l'anneau souple de se dilater en direction de l'ébauche de gomme. L'anneau souple 15 présentant un volume inférieur à celui de l'ébauche (inférieur à la moitié du volume de celle-ci) et étant par ailleurs emboîté par ses autres côtés dans le moule rigide, il ne peut pas être déformé par la pression exercée par la gomme durant le moulage. Ainsi, de par le fait que l'anneau souple 15 a des dimensions très précises et qu'il est emboîté à l'intérieur du moule 20 (on comprend qu'il est inséré entre les différentes pièces du moule sans possibilité de déplacement et sans jeu), l'anneau souple conserve sa forme initiale lors de la vulcanisation de l'ébauche de l'adaptateur. Il a ainsi été constaté que l'adaptateur obtenu avec le moule de l'invention, dont les composants sont rigides ou non déformables, présente une forme et des dimensions précises, malgré l'utilisation d'une empreinte souple.

Le support rigide 10 est une bague rigide réalisée en un matériau métallique, par exemple de l'aluminium ou de l'acier. Lorsque l'on utilise un support rigide 10 en acier, il est préférable de lui appliquer un revêtement en PTFE afin d'éviter l'accrochage de la gomme sur le support.

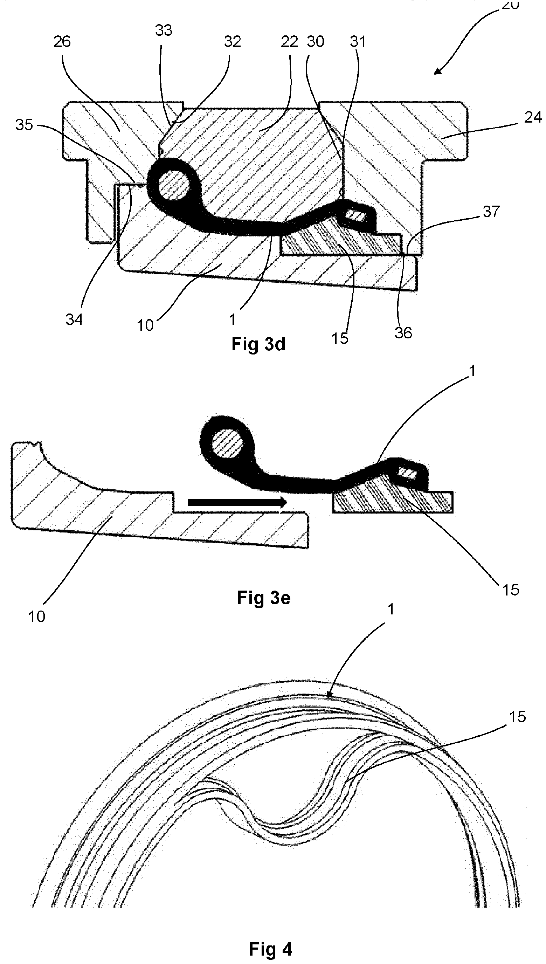

Aux figures 2 et 3d on observe que, en position de fermeture du moule, chaque secteur 22 vient en appui sur la coquille latérale 24 via les surfaces de contact 30, 31 et sur la coquille latérale 26 via les surfaces de contact 32, 33. Chaque secteur 22 comporte également des faces transversales 22a jointives en position de fermeture du moule avec les faces transversales des secteurs adjacents. Les faces radialement intérieures 34, 36 du support rigide 10 viennent, en position de fermeture, en contact avec les faces correspondantes 35, 37 aménagées dans les coquilles latérales 26 et 24. L'anneau souple 15 est emboîté, en position de fermeture, entre le support rigide 10, la coquille latérale 24 et l'ébauche de l'adaptateur 1. La position axiale du support rigide 10 en position de fermeture est déterminée par la cinématique de la presse, tel qu'il sera expliqué par la suite.

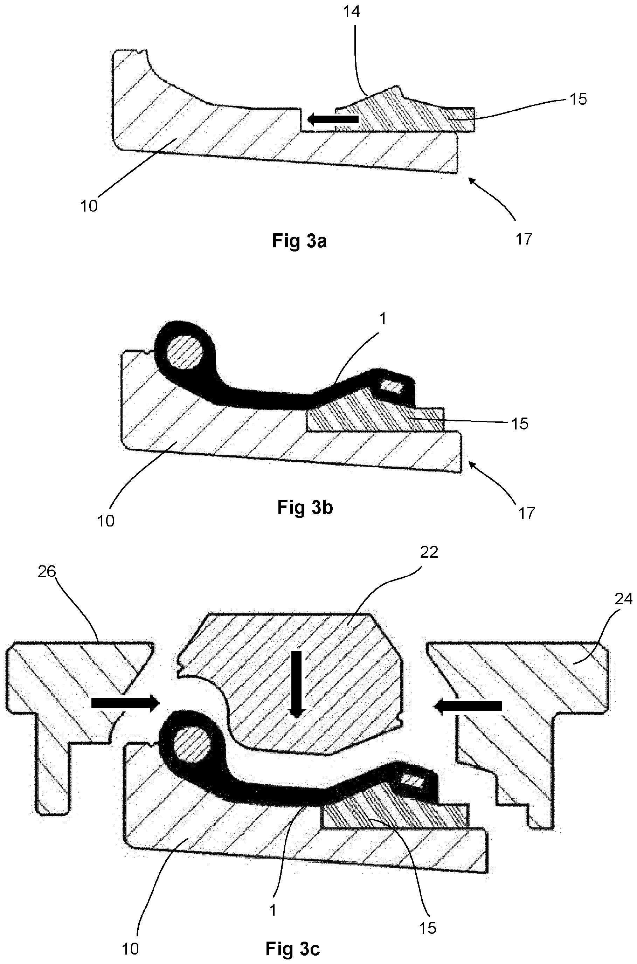

On va maintenant expliquer en référence aux figures 3a à 3e le procédé de fabrication d'un adaptateur 1 moyennant la mise en oeuvre d'un moule 20 selon l'invention.

Un anneau souple 15 est introduit sur le support rigide 10 dans la direction indiquée par la flèche sur la figure 3a et forment l'ensemble de moule inférieur 17. Le moule inférieur 17 est utilisé comme support pour l'ébauche de l'adaptateur dès le début de sa fabrication. Autrement dit, le moule inférieur 17 est utilisé comme support d'assemblage pour les différents composants de celle-ci. Ainsi, on réalise un assemblage d'ébauche d'adaptateur en déposant une première nappe de protection sur la surface de pose 18 du moule inférieur 17 pendant que celui-ci est entraîné en rotation autour de son axe (qui coïncide avec l'axe X-X'). Afin d'obtenir une nappe ayant des dimensions très précises, on procède à une pose de bandelettes par trancanage à l'aide d'une pompe volumétrique ou pompe à gomme de type connu. On dispose ensuite une nappe carcasse sur la nappe de protection en faisant déborder ses côtés latéraux de part et d'autre du moule inférieur 17. On dispose ensuite le tube 8 et la tringle 5 et les gommes de bourrage de leurs bourrelets respectifs. La tringle 5 peut être du type paquet ou obtenue par enroulage sur place Le tube 8 est réalisé en un matériau composite ou il peut être réalisé sous forme d'une tringle, comme la tringle 5. On retourne ensuite les extrémités de la nappe carcasse sur le tube 8 et la tringle 5. On rajoute une nappe de remplissage lorsque les extrémités de la nappe carcasse ne se touchent pas. On finit l'assemblage par une pose de gomme intérieure d'étanchéité. L'assemblage d'ébauche d'adaptateur ainsi obtenue est visible à la figure 3b.

La figure 3c illustre de manière schématique la cinématique de fermeture du moule de vulcanisation. On approche ainsi, par glissement, radialement les secteurs 22 et axialement les coquilles latérales 24, 26 dans le sens des flèches sur la fig. 3c jusqu'à venir se fermer autour de l'ébauche de l'adaptateur 1. Pour obtenir les mouvements des secteurs et des coquilles, on peut utiliser par exemple des vérins mécaniques, hydrauliques ou pneumatiques ou un mécanisme motorisé adapté. Dans un exemple de réalisation, les coquilles 24 et 26 sont solidaires chacune d'un plateau de la presse, au moins l'un étant mobile, et le support rigide 10 d'un moyeu central de celle-ci. Les secteurs 22 sont reliés par une tige radiale à un vérin ou, dans une variante, à une came solidaire d'un plateau mobile de la presse. Le mouvement de rapprochement axial des coquilles 24, 26 est coordonné avec le mouvement de rapprochement radial des secteurs 22 en direction de l'ébauche d'adaptateur de manière à venir en contact entre eux et avec l'ébauche. Le support rigide 10 est amené en butée axiale par le moyeu central de la presse pour se positionner par rapport aux composants du moule (secteurs 22 et coquilles 24,26) en position de fermeture de celui-ci.

Le moule 20 est ensuite maintenu fermé, tel que visible à la fig. 3d, par exemple à l'aide d'une fixation à vis ou moyennant des vérins hydrauliques. Le moule est ensuite chauffé à la température de cuisson, par exemple 170°C pendant une durée prédéterminée, par exemple 20min. La montée en température de la gomme génère la pression de vulcanisation.

La figure 3e illustre le moule ouvert, après avoir retiré axialement les coquilles 24, 26 et radialement les secteurs 22, l'adaptateur 1 vulcanisé étant retiré par rapport au support rigide 10 dans le sens de la flèche, ensemble avec l'anneau souple 15.

L'anneau souple 15 est retiré en exerçant une poussée radialement à l'intérieur de l'adaptateur, voire par son propre poids, tel que visible à la fig. 4. Il est ensuite replacé sur le support rigide 10 pour réaliser un nouvel assemblage d'ébauche d'adaptateur et ensuite la vulcanisation de celle-ci.

Les formes d'exécution décrites ci-dessus ne sont bien sûr pas limitatives. Ainsi, on peut utiliser plusieurs anneaux souples sur un support rigide selon la complexité de la forme de l'adaptateur.

## Revendications

1. Moule (20) de vulcanisation d'un adaptateur (1) annulaire de pneumatique sur une jante de véhicule, ledit moule comportant :
- un moule inférieur (17) non déformable définissant la surface extérieure de l'adaptateur ;
- deux coquilles latérales (24,26) servant au moulage des surfaces frontales de l'adaptateur ;
- une couronne périphérique divisée en plusieurs secteurs (22) circonférentiels assurant le moulage de la surface intérieure de l'adaptateur ;
**caractérisé en ce que** ledit moule inférieur (17) non déformable comprend un support rigide (10) sur lequel est monté un anneau souple (15) ledit moule étant réalisé de manière à ce que l'anneau souple (15) soit emboîté à l'intérieur du moule (20) en position de fermeture de celui-ci.

2. Moule selon la revendication 1, caractérisé en ce ledit anneau souple (15) est monté sans possibilité de déplacement entre ledit support rigide (10) et une coquille latérale (24) et est espacé des secteurs (22) d'une distance correspondant à l'épaisseur de l'adaptateur.

3. Moule selon l'une des revendications 1 ou 2, **caractérisé en ce que** ledit support rigide (10) est réalisé en un matériau métallique et **en ce que** ledit anneau souple (15) est réalisé en un matériau inorganique.

4. Moule selon la revendication 3, **caractérisé en ce que** ledit anneau souple (15) est en silicone ayant une dureté supérieure à 30 Shore A et de préférence supérieure à 50 Shore A.

5. Moule selon l'une des revendications précédentes, **caractérise en ce que** l'ensemble de pièces formé par le moule inférieur (17), les coquilles (22,24) et les secteurs (22) définit l'espace de moulage de l'adaptateur (10) et **en ce que** ces pièces ont une configuration telle qu'elles sont en relation de glissement l'une par rapport à l'autre au moins pendant la phase finale de fermeture du moule.

6. Moule selon l'une des revendications précédentes, **caractérisé en ce que** ledit moule inférieur (17) non déformable sert de support d'assemblage de l'ébauche d'adaptateur.

7. Moule selon l'une des revendications précédentes, **caractérisé en ce que** ledit adaptateur (1) comprend un bourrelet (2) d'adaptateur servant à la fixation sur une jante, une armature (3) d'adaptateur qui relie le bourrelet (2) à un renfort (4) d'adaptateur apte à se fixer autour du bourrelet d'un pneumatique

8. Procédé de vulcanisation d'un adaptateur (1) de pneumatique sur une jante de véhicule moyennant un moule (20) de vulcanisation selon l'une des revendications précédentes, comportant les étapes suivantes :
- on installe une ébauche de gomme crue sur un moule inférieur (17) non déformable comportant un support moulant rigide (10) annulaire qui supporte un anneau souple (15) et définit avec ce dernier la surface extérieure de l'adaptateur,
- on déplace axialement deux coquilles latérales (24, 26) et radialement une couronne périphérique de secteurs (22) pour fermer ledit moule (20),
**caractérisé en ce que**, en position de fermeture du moule (20) on vient emboîter ledit anneau souple (15) à l'intérieur du moule.

9. Procédé selon la revendication 8, **caractérisé en ce qu'**il comporte une étape préalable d'assemblage de ladite ébauche d'adaptateur directement sur le moule inférieur (17) non déformable.

10. Procédé selon l'une des revendications 8 ou 9, **caractérisé en ce qu'**au moins une nappe de gomme de ladite ébauche d'adaptateur est obtenue par un dépôt de bandelettes de gomme à l'aide d'une pompe volumétrique.

## Patentansprüche

1. Form (20) zum Vulkanisieren eines ringförmigen Adapters (1) für eine Reifenfelge eines Fahrzeugs, wobei die Form umfasst:
- eine nicht verformbare untere Form (17), die die Außenfläche des Adapters definiert;
- zwei seitliche Schalen (24, 26), die zum Formen der Frontflächen des Adapters dienen;
- einen Umfangskranz, der in mehrere Umfangssektoren (22) unterteil ist, der das Formen der Innenfläche des Adapters gewährleistet;
**dadurch gekennzeichnet, dass** die nicht verformbare untere Form (17) einen starren Träger (10) umfasst, auf dem ein biegsamer Ring (15) montiert ist, wobei die Form derart hergestellt ist, dass der biegsame Ring (15) in die Form (20) in der geschlossenen Position derselben eingesteckt ist.

2. Form nach Anspruch 1, **dadurch gekennzeichnet, dass** der biegsame Ring (15) ohne Möglichkeit einer Verlagerung zwischen dem starren Träger (10) und einer seitlichen Schale (24) montiert und von den Sektoren (22) um einen Abstand entsprechend der Dicke des Adapters entfernt ist.

3. Form nach einem der Ansprüche 1 oder 2, **dadurch gekennzeichnet, dass** der starre Träger (10) aus einem metallischen Material hergestellt ist, und dass der biegsame Ring (15) aus einem anorganischen Material hergestellt ist.

4. Form nach Anspruch 3, **dadurch gekennzeichnet, dass** der biegsame Ring (15) aus Silikon mit einer Härte über 30 Shore A und vorzugsweise über 50 Shore A ist.

5. Form nach einem der vorhergehenden Ansprüche, **dadurch gekennzeichnet, dass** die Gesamtheit von Teilen, die von der unteren Form (17), den Schalen (22, 24) und den Sektoren (22) gebildet ist, den Formungsraum des Adapters (10) definiert, und dass die Teile eine derartige Konfiguration haben, dass sie miteinander zumindest während der Endphase des Schließens der Form in Gleitverbindung stehen.

6. Form nach einem der vorhergehenden Ansprüche, **dadurch gekennzeichnet, dass** die nicht verformbare untere Form (17) als Träger für die Montage des Adapterrohlings dient.

7. Form nach einem der vorhergehenden Ansprüche, **dadurch gekennzeichnet, dass** der Adapter (1) einen Adapterwulst (2), der zur Befestigung auf einer Felge dient, eine Adapterbewehrung (3), die den Wulst (2) mit einer Adapterverstärkung (4) verbindet, die geeignet ist, sich um den Wulst eines Reifens zu befestigen, umfasst.

8. Verfahren zum Vulkanisieren eines Adapters (1) für eine Reifenfelge eines Fahrzeugs mit Hilfe einer Form (20) zum Vulkanisieren nach einem der vorhergehenden Ansprüche, umfassend die folgenden Schritte:
- Legen eines Rohgummis auf eine nicht verformbare untere Form (17), umfassend einen ringförmigen starren Formträger (10), der einen biegsamen Ring (15) trägt und mit diesem letztgenannten die Außenfläche des Adapters definiert;
- axiales Verschieben von zwei seitlichen Schalen (24, 26) und radiales Verschieben einer Umfangssäule von Sektoren (22), um die Form (20) zu schließen,
**dadurch gekennzeichnet, dass** in geschlossener Position der Form (20) der biegsame Ring (15) in die Form eingesteckt wird.

9. Verfahren nach Anspruch 8, **dadurch gekennzeichnet, dass** es einen vorherigen Schritt der Montage des Adapterrohlings direkt auf der nicht verformbaren unteren Form (17) umfasst.

10. Verfahren nach einem der Ansprüche 8 oder 9, **dadurch gekennzeichnet, dass** mindestens eine Gummischicht des Adapterrohlings durch ein Aufbringen von Gummibändern mit Hilfe einer volumetrischen Pumpe erhalten wird.

## Claims

1. Mould (20) for vulcanizing an annular adapter (1) for a tyre on a vehicle rim, said mould comprising:
- a non-deformable lower mould (17) defining the outer surface of the adapter;
- two lateral shells (24, 26) serving for moulding the frontal surfaces of the adapter;
- a peripheral crown divided into multiple circumferential sectors (22), providing moulding of the inner surface of the adapter;
**characterized in that** said non-deformable lower mould (17) comprises a rigid support (10) on which is mounted a flexible ring (15), said mould being made such that the flexible ring (15) is fitted inside the mould (20) in the closed position of the latter.

2. Mould according to Claim 1, **characterized in that** said flexible ring (15) is mounted with no possibility of movement between said rigid support (10) and a lateral shell (24), and is spaced apart from the sectors (22) by a distance corresponding to the thickness of the adapter.

3. Mould according to Claim 1 or 2, **characterized in that** said rigid support (10) is made of a metallic material, and **in that** said flexible ring (15) is made of an inorganic material.

4. Mould according to Claim 3, **characterized in that** said flexible ring (15) is made of silicone having a hardness of greater than 30 Shore A, and preferably greater than 50 Shore A.

5. Mould according to one of the preceding claims, **characterized in that** the set of parts formed by the lower mould (17), the shells (22, 24) and the sectors (22) defines the moulding space for the adapter (10), and **in that** these parts are configured such that they are able to slide with respect to one another at least during the final phase of closing of the mould.

6. Mould according to one of the preceding claims, **characterized in that** said non-deformable lower mould (17) serves as an assembly support for the adapter blank.

7. Mould according to one of the preceding claims, **characterized in that** said adapter (1) comprises an adapter bead (2) serving for securing to a rim, an adapter carcass (3) that connects the bead (2) to an adapter reinforcement (4) that can be attached around the bead of a tyre.

8. Method of vulcanizing an adapter (1) for a tyre on a vehicle rim by means of a vulcanising mould (20) according to one of the preceding claims, comprising the following steps:
- installing a blank consisting of raw rubber onto a non-deformable lower mould (17) comprising an annular rigid moulding support (10) which supports a flexible ring (15) and defines, therewith, the outer surface of the adapter,
- moving axially two lateral shells (24, 26) and radially a peripheral crown of sectors (22) in order to close said mould (20),
**characterized in that**, in the closed position of the mould (20), said flexible ring (15) is fitted inside the mould.

9. Method according to Claim 8, **characterized in that** it comprises a prior step of assembling said adapter blank directly on the non-deformable lower mould (17).

10. Method according to one of Claims 8 and 9, **characterized in that** at least one layer of rubber of said adapter blank is obtained by depositing strips of rubber using a volumetric pump.
